Europäisches Patentamt

European Patent Office

Office européen des brevets

(11) Publication number: **0 268 173 B1**

# EUROPEAN PATENT SPECIFICATION

(45) Date of publication of patent specification: **02.09.92**   (51) Int. Cl.⁵: **B62D 5/07**

(21) Application number: **87116495.0**

(22) Date of filing: **09.11.87**

(54) **Hydraulic valve for steering assemblies.**

(30) Priority: **17.11.86 IT 357786**

(43) Date of publication of application:
**25.05.88 Bulletin 88/21**

(45) Publication of the grant of the patent:
**02.09.92 Bulletin 92/36**

(84) Designated Contracting States:
**DE ES FR GB**

(56) References cited:
**EP-A- 0 137 185**
**DE-A- 3 507 122**
**FR-A- 2 353 427**

(73) Proprietor: **S.A.M. HYDRAULIK S.p.A.**
**3, Via Masaccio**
**I-42100 Reggio Emilia(IT)**

(72) Inventor: **Ferretti, Orles**
**Via Brugnoletta, 15**
**I-42019 Scandiano (Prov. Reggio Emilia)(IT)**
Inventor: **Brevini, Corrado**
**Via Labellarte 4**
**I-42100 Reggio Emilia(IT)**

(74) Representative: **Modiano, Guido et al**
**MODIANO & ASSOCIATI S.A.S. Via Meravigli, 16**
**I-20123 Milan(IT)**

Rank Xerox (UK) Business Services

## Description

The present invention relates to a hydraulic valve for steering assemblies.

In the field of hydraulic steering actuators, so-called "load sensing" valve devices are known which allow to use the excess flow delivered by the pump with respect to that instantly demanded by the steering assembly. This excess flow is generally used for the actuation of a secondary user device, with obvious advantages from the point of view of energy saving. The valve must in any case, for safety reasons, ensure the priority of the steering actuator with respect to the secondary user device, while the pump reaches the highest of the pressures required by the uses.

Priority valves currently in use have, however, several functional disadvantages, besides being considerably expensive. In fact, two different pumps are generally required for the two different uses, which make the apparatus uneconomical and complicated. Besides this, the known types of valves have a high energy dissipation during the braking action, poor regularity in operation with consequent vibrations and noise and limited sensitivity to flow variations.

Hydraulic valves for steering assemblies having a priority valve and one pump for delivering the pressurized oil are disclosed in the FR-A1-2353427, EP-A3-137185 and DE-A-3507122.

In particular the FR-A1-2353427 (corresponding to the preamble of claim 1 discloses an hydraulic valve whereby the highest pressure in the steering assembly is used to control the priority valve. However for connecting the steering assembly to the priority valve a steering actuator is arranged having a complicated structure owing to the provisions of a lot of channels, openings and the like which require sophisticated machining operations with exorbitant costs.

The aim of the present invention is to solve the above described problem, by providing a hydraulic valve for steering assemblies which allows the secondary use of the excess delivered flow by means of a very simple device, so as to lead to a considerable improvement of the functional characteristics as well as to a reduction of the apparatus cost.

The above aim is achieved in accordance with the invention by means of the features of claim 1.

The dependent claims 2 to 4 respectively characterize advantageous developments thereof.

Further characteristics and advantages of the invention will become apparent from the detailed description of a preferred embodiment of the hydraulic valve for steering assemblies, illustrated only by way of non-limitative example in the accompanying drawing, wherein:

figure 1 is a schematic view of a steering assembly actuated by means of the valve device according to the invention;

figure 2 is a hydraulic circuit diagram of said valve device;

figure 3 is a longitudinal cross section view of the priority valve according to the invention;

figure 4 is a cross section view of an embodiment of a valve provided with a differential-area pusher element;

figure 5 is a schematic partial view of a steering assembly provided with a valve according to another aspect of the invention;

figure 6 is a schematic, partially cut-out view of a valve according to another aspect of the invention.

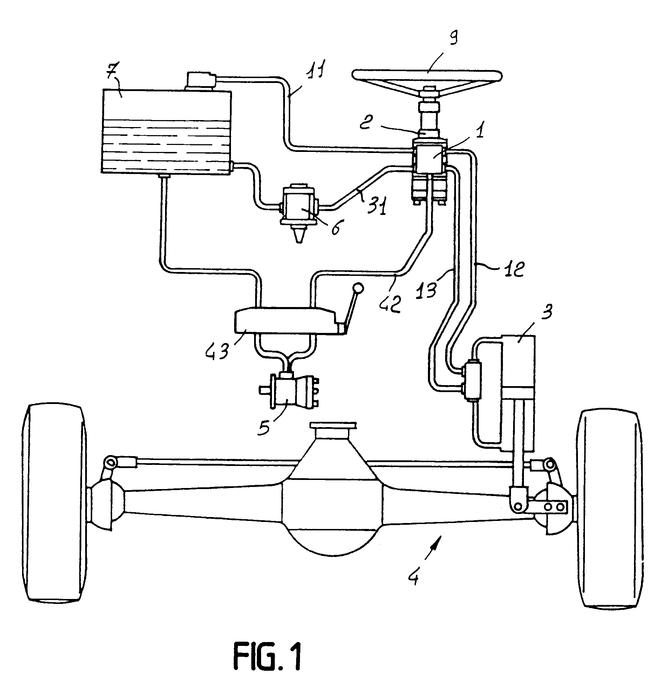

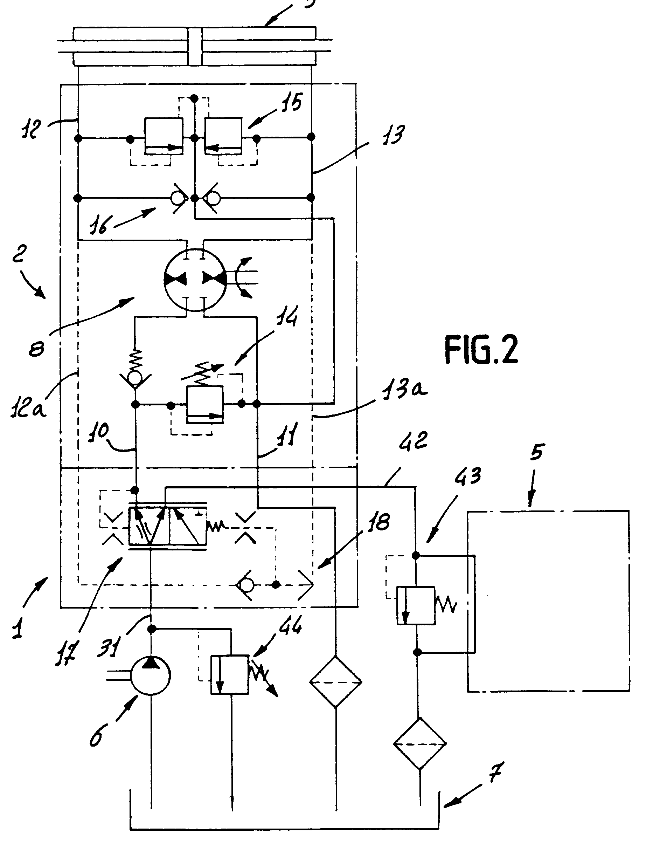

With reference to figures 1-4, the reference numeral 1 indicates the priority valve which, according to the invention, is applied to a conventional hydraulic steering actuator 2 for supplying a cylinder 3 of a steering assembly 4. The valve 1 is adapted to supply a secondary user device 5 with the excess flow delivered by a pump 6, preferably of the volumetric type. The oil is drawn from a tank 7 and circulates in a closed circuit provided with adapted filtering means.

The hydraulic steering actuator 2 is substantially constituted by a closed-center distributor element 8, that, with the steering wheel 9 in neutral position, cuts off the connection between the ducts 10 and 11 respectively for the delivery of the pressurized and discharge oil. Depending on the direction of rotation of the steering assembly, the distributor 8 routes the pressurized oil to one or the other of the chambers of the cylinder 3, alternately by means of the ducts 12 and 13. A limiting valve 14 for limiting the pressure of the hydraulic steering actuator is provided between the ducts 10, 11, and a shock-resistant valve 15 and an anti-cavitation valve 16 are furthermore provided between the ducts 12, 13.

The priority valve 1 comprises a controlled distributor 17 and a signal, or pressure, selection valve 18. The distributor 17 is adapted to distribute the oil sent under pressure by the pump 6 between the hydraulic steering actuator 2 and the secondary user device 5, so as to keep constant, in any condition, the pressure differential between the inlet to the hydraulic steering actuator and the steering cylinder 3, as will be specified in greater detail hereinafter. For this purpose, the inlet pressure at the hydraulic steering actuator 2 and the highest of the pressures existing in the two chambers of the cylinder 3, selected by the valve 18 which is connected to the branches 12a, 13a of the ducts 12, 13, are respectively sent to the ends of the controlled distributor 17.

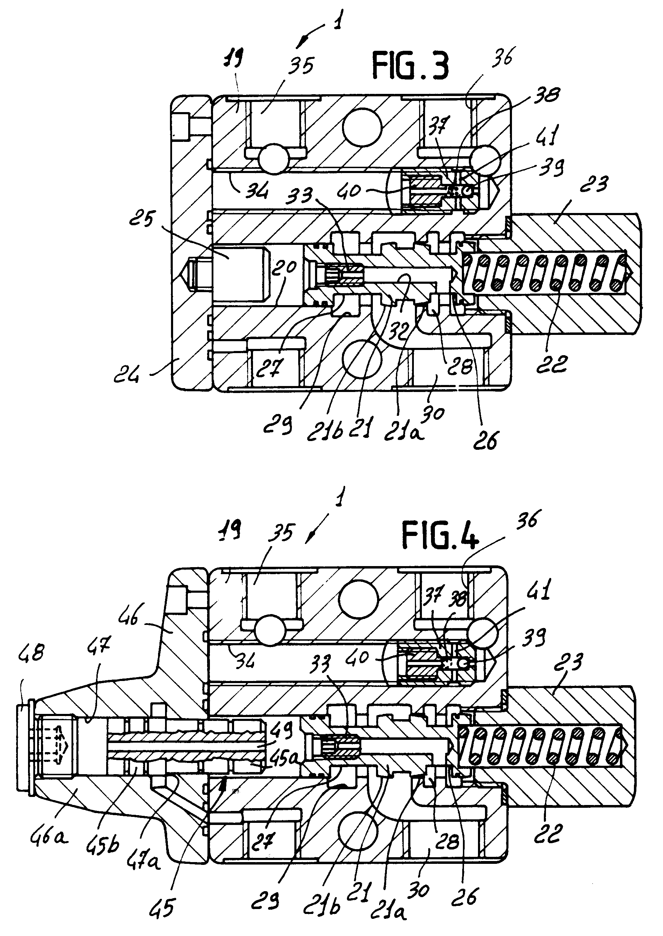

As illustrated in greater detail in fig. 3, the priority valve 1 is composed of a body 19 in which a seat 20 is provided for an active element preferably constituted by a small and variously shaped piston 21, constituting the active element of the distributor 17. The axial movement of the piston 21 is counteracted by an elastic means, for example a helical spring 22 accommodated in an axial cavity of a plug 23 which closes at one end the sliding seat 20. At the other end, the seat 20 is closed by a flange 24 frontally provided with a tang 25 which is adapted to insert in said seat. The plug 23 and the tang 25 precisely define the maximum stroke of the piston.

The small piston 21 is provided with a first annular groove and with a second annular groove, respectively indicated by 26 and 27, which are adapted to cooperate with a corresponding pair of annular grooves 28 and 29 of the seat 20; ducts, not illustrated in fig. 3, supplying oil to the hydraulic steering actuator and to the secondary user device, lead respectively into said grooves. An inlet 30 of the duct 31 for the inflow of oil from the pump 6 opens in an intermediate position between the grooves 28 and 29. It should be noted that the portions 21a and 21b of the outer surface of the piston, adjacent to the grooves 26, 27 and intended to act as shutters for the ports for the delivery of oil to the grooves 28 and 29, have counterposed conical shapes so as to progressively vary the span of said ports as said piston moves.

The small piston 21 is furthermore provided with an axial hole 32 which leads at one end, radially with respect to said small piston, into the groove 26, while a first perforated dowel 33 is threadingly coupled at the other end.

A small cylinder 37, constituting the body of the selection valve 18, is threadingly inserted in a threaded hole 34 of the body 19, arranged to the side of the sliding seat 20 of the distributor and connected at the ends to the couplings 35, 36 of the ducts 12a, 13a. A chamber 38 for the accommodation of a shutter element constituted by a small ball 39 is provided axially through the cylinder 37; the movement of the ball is limited on one side by a shoulder defined by the chamber 38 and on the other by a second perforated dowel 40. Therefore the two ends of the selection valve 18 are connected to pressurized fluid in the opposite chambers of the steering cylinder 3, while the central chamber 38 is connected by means of a transverse hole 41 and a duct not visible in the drawing, to the end of the small piston 21 of the distributor on which the spring 22 acts.

At the output of the priority valve 1 the oil is sent, by means of a duct 42, to the secondary user device 5, controlled by an open-center distributor 43

The hydraulic circuit of the valve device also comprises a valve 44, downstream with respect to the pump 6, for limiting the pressure of the plant.

The operation of the valve device described is as follows. The pressurized oil sent by the pump 6 is distributed by the valve 1 between the hydraulic steering actuator 2 of the steering assembly and the secondary user device 5. The pressure at the inlet to the hydraulic steering actuator is detected by means of the axial hole 32 of the small piston 21; while the highest of the pressures of the two chambers of the steering cylinder 3 is detected by the selection valve 18, the ball 39 whereof is pushed so as to obstruct the port of the chamber 38 of the small cylinder 37 connected to the lowest pressure; the ends of the distributor 17 of the valve 1 are respectively in connection with the pressure at the inlet and with the highest pressure of the steering cylinder.

This allows to keep the pressure differential between the inlet to the hydraulic steering actuator and the steering cylinder at a constant value, which depends on the calibration of the spring 22 as well as on the geometry of the distributor 17. In fact, if said pressure differential exceeds the reference value, the small piston 21 moves and further compresses the spring until it partially closes the delivery port of the groove 28, connected to the hydraulic steering actuator 2; the flow is consequently decreased and so is the pressure drop on the ports of the hydraulic steering actuator, this leading to a new condition of balance of the distributor at a value of the pressure differential which is equal to the reference value.

If conversely the pressure differential decreases, the small cylinder 21, pushed by the spring 22, opens the delivery port of the groove 28, increasing the flow up to the restoring of a pressure differential equal to the reference one.

In other words, the priority valve 1 maintains at a preset value the pressure drop at the ports of the distributor 8 of the hydraulic steering actuator 2 and thus provides an univocal and proportional correspondence between the steering flow and the control area determined by the position of said distributor of the hydraulic steering actuator.

According to another aspect of the invention, the distributor 17 of the valve 1 can be opposed by a differential-area pusher, of the type illustrated in fig. 4. Said pusher, indicated by 45 in the drawing, is mounted in a flange 46 fixed to the body 19 of the valve, instead of the previously described flange 24. The pusher 45 is slideable in a seat 47 provided in an enlarged portion 46a of the flange; said seat is aligned, in assembly position, with the seat 20 of the small piston 21 and is externally closed by a plug 48.

The pusher 45 is provided with a through axial hole 49 and with a portion 45a directed towards the small piston 21 having a diameter which is slightly smaller than the remaining portion 45b. An annular shoulder 47a provided on the inner surface of the seat 47 is adapted to abut with said portion 45b which has a greater diameter, thereby limiting the stroke of the pusher, which, by means of the hole 49, is acted upon by the pressure present at the inlet to the hydraulic steering actuator.

The pusher 45 is adapted to act on the small piston 21 of the distributor 17, in contrast with the action of the spring 22, so as to prevent the irregular operation of the secondary user device at the end of the stroke. In fact, when the steering actuation element reaches the stroke-end position the pressure at the inlet to the hydraulic steering actuator rapidly rises to values which depend on the setting of the valves 14 and 44 for limiting the pressure respectively of said hydraulic steering actuator and of the entire apparatus. In these conditions, the pusher 45 overcomes the action of the spring 22 and pushes the small piston 21 in a position of opening of the ports connecting the pump and the secondary user device, allowing a regular operation of the secondary user device.

It is also possible to use the valve, according to the present invention, in an apparatus provided with a variable displacement pump. In this case the signal originating from the selection valve 18 is compared, by means of a further similar selection valve, with a closed-center distributor of the secondary user 5 The pressure thus selected is then sent to the pump, which keeps constant the difference between the latter and the delivery pressure.

The valve according to the invention substantially distributes the flow according to the real requirements of the uses with a reduced energy dissipation during steering

It should be noted that the valve described allows the use of an ordinary closed-center hydraulic steering actuator and therefore does not require the production of a special "load sensing" hydraulic steering actuator.

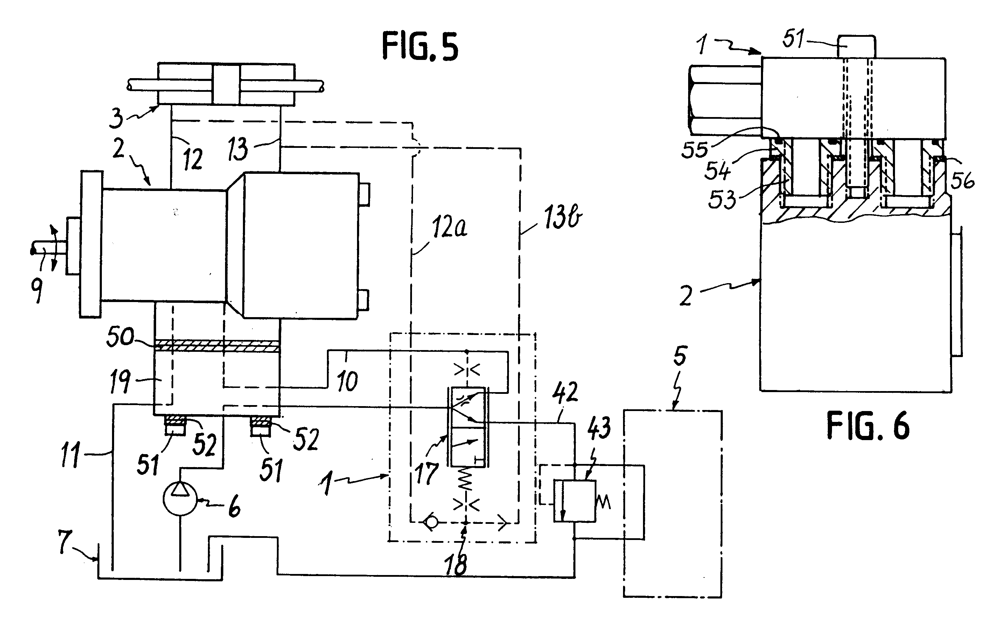

In order to prevent the pressurized fluid passing through the hydraulic steering actuator from reaching such a high temperature as to reduce its lubricating ability between the body 19 of the priority valve and the body of the hydraulic steering actuator 2, a layer of thermally insulating material (for example based on asbestos or on suitable plastics materials) is provided and has openings at the channels to be connected. In order to prevent any thermal bridges between the body 19 of the priority valve and the heads of the screws 51 which join the priority valve 1 to the hydraulic steering actuator 2, washers 52, also made of thermally insulating material, are interposed. For the same purpose of keeping the heat exchange low, figure 6 illustrates the arrangement of spacers adapted to create an interspace between the body of the priority valve and the body of the hydraulic steering actuator. Each spacer is constituted by a bush 53 made of steel or the like, adapted to be screwed into a threaded seat of the body of the hydraulic steering actuator at the ports of the channels to be connected and is provided with a collar 54 which remains locked between the body 19 of the valve and the body of the hydraulic steering actuator. The collar is provided, on one face, with a front annular groove for the accommodation of a sealing ring 55. A washer 56 is interposed between the collar 54 and the body of the hydraulic steering actuator.

In practice the materials employed, as well as the dimensions, may be any according to the requirements and the state of the art.

## Claims

1. Hydraulic valve for steering assemblies comprising a distributor (17) for distributing pressurized oil between a hydraulic steering cylinder (3) through a hydraulic steering actuator (2) and a secondary user device (5), said distributor (17) comprising a piston (21) defining shutter means (21a, 21b) for controlling the delivery of the pressurized oil to said steering actuator (2) and said user device (5) respectively, said piston (21) being axially actuated against spring means (22) by the pressure difference existing on its opposite ends, the pressure at the inlet to said hydraulic steering actuator acting on the opposite side of the piston to the spring, characterized in that a pressure selection valve (18) is provided adapted to detect the highest pressure existing between the opposite chambers of said steering cylinder (3) said pressure selection valve (18) being connected to said distributor (17) to apply said highest pressure on the side of said piston (21) on which said spring means (22) are acting.

2. Hydraulic valve according to claim 1 characterized in that said pressure selection valve (18) comprises a seat (38) connected through a duct to the side of said piston on which said spring means (22) are acting, opposite parts formed in said seat and connected to the respective chambers of said steering cylinder (3) and a shutter (39) arranged in said seat (38) and controlling said ports to connect the chamber in which the highest pressure is present with said duct.

3. Hydraulic valve according to claim 1 characterized in that a differential-area pusher (45) is provided adapted to act on said piston (21) against said spring means (22), said pusher (45) being actuated by the pressure at the inlet of said hydraulic steering actuator (2).

4. Hydraulic valve according to claim 1 characterized in that it is associated to said hydraulic steering actuator (2) with the interposition of thermally insulating means (52,53).

**Patentansprüche**

1. Hydraulisches Ventil für Lenkvorrichtungen, das einen Verteiler (17) zum Verteilen von unter innerem Überdruck stehendem Öl zwischen einem hydraulischem Lenkzylinder (3) über ein hydraulisches Lenkstellglied (2) und eine zweite Benutzereinrichtung (5) umfaßt, wobei der Verteiler (17) einen Kolben (21), welcher eine Verschließeinrichtung (21a, 21b) zum Steuern der Ausgabe des mit unter innerem Überdruck stehenden Öles an das Lenkstellglied (2) bzw. die Benutzereinrichtung (5) definiert, aufweist, wobei der Kolben (21) axial gegen Federeinrichtungen (22) durch die an seinen beiden Enden vorhandene Druckdifferenz wirkt, wobei der Druck am Einlaß des hydraulischen Lenkstellgliedes auf die gegenüberliegende Seite des Kolbens zu der Feder hin einwirkt, dadurch gekennzeichnet, daß ein Druckauswahlventil (18) vorgesehen ist, das angepaßt ist, um den höchsten zwischen den gegenüberliegenden Kammern des Lenkzylinders (3) vorhandenen Druck zu ermitteln, und das mit dem Verteiler (17) verbunden ist, um den höchsten Druck auf die Seite des Kolbens (21) anzulegen, auf der die Federeinrichtungen (22) wirken.

2. Hydraulisches Ventil nach Anspruch 1, dadurch gekennzeichnet, daß das Druckauswahlventil (18) einen Sitz (38) umfaßt, der über eine Rohrleitung mit der Seite des Kolbens verbunden ist, auf welche die Federeinrichtungen (22) wirken, wobei gegenüberliegende Teile in den Sitz eingeformt und mit den entsprechenden Kammern des Lenkzylinders (3) und einem Verschluß (39) verbunden sind, welcher in dem Sitz (38) angeordnet ist und die Öffnungen steuert, um die Kammer, in der der höchste Druck vorliegt, mit der Rohrleitung zu verbinden.

3. Hydraulisches Ventil nach Anspruch 1, dadurch gekennzeichnet, daß eine Differentialbereichsschubvorrichtung (45) vorgesehen ist, die angepaßt ist, um auf den Kolben (21) gegen die Federeinrichtung (22) einzuwirken, wobei die Schubvorrichtung (45) durch den Druck am Einlaß des hydraulischen Lenkstellgliedes (2) beaufschlagt ist.

4. Hydraulisches Ventil nach Anspruch 1, dadurch gekennzeichnet, daß es mit dem hydraulischen stellglied (2) unter Zwischenfügung von wärmeisolierenden Einrichtungen (52, 53) verbunden ist.

**Revendications**

1. Soupape hydraulique pour ensemble de direction comprenant un distributeur (17) pour répartir de l'huile sous pression entre un cylindre de direction hydraulique (3) par l'intermédiaire d'un actionneur de direction hydraulique (2) et un dispositif utilisateur secondaire (5), ledit distributeur (17) comprenant un piston (21) qui définit des moyens d'obturation (21a,21b) pour régler l'envoi de l'huile sous pression audit actionneur de direction (2) et audit dispositif utilisateur (5) respectivement, ledit piston (21) étant axialement actionné en opposition à des moyens élastiques (22) par la différence de pression qui existe sur ses extrémités opposées, la pression à l'entrée dudit actionneur de direction hydraulique agissant sur le côté du piston opposé aux moyens élastiques, caractérisée en ce qu'il est prévu un clapet de sélection de pression (18) agencé pour détecter la pression la plus élevée qui existe dans l'une ou l'autre des chambres opposées dudit cylindre de direction (3), ledit clapet de sélection de pression (18) étant connecté audit distributeur (17) de manière à appliquer ladite pression la plus élevée du côté dudit piston (21) sur lequel agissent lesdits moyens élastiques (22).

2. Soupape hydraulique suivant la revendication 1, caractérisée en ce que ledit clapet de sélection de pression (18) comprend un siège (38) connecté par un conduit au côté dudit piston sur lequel agissent lesdits moyens élastiques (22), des passages opposés ménagés dans ledit siège et connectés aux chambres respectives dudit cylindre de direction (3), et un obturateur (39) disposé dans ledit siège (38) et commandant lesdits passages pour connecter la chambre dans laquelle règne la pression la plus élevée avec ledit conduit.

3. Soupape hydraulique suivant la revendication 1, caractérisée en ce qu un poussoir à surface différentielle (45) est prévu et peut agir sur ledit piston (21) en opposition auxdits moyens élastiques (22), ledit poussoir (45) étant actionné par la pression à l'entrée dudit actionneur de direction hydraulique (2).

4. Soupape hydraulique suivant la revendication 1, caractérisée en ce qu'elle est associée audit actionneur de direction hydraulique (2) avec interposition de moyens thermiquement isolants (42,53).

FIG.1

EP 0 268 173 B1

FIG.2

FIG.3

FIG.4

# FIG.5

# FIG. 6

EP 0 268 173 B1